# EUROPEAN PATENT APPLICATION

(11) **EP 3 998 595 A2**
(43) Date of publication of application: **18.05.2022**
(21) Application number: 22164355.4
(22) Date of filing: 25.03.2022
(51) Int. Cl.: G09B 19/16

(54) **METHOD AND APPARATUS FOR ADJUSTING DRIVING TRAINING COURSE**

(30) Priority: 18.06.2021 CN 202110679215
(71) Applicant: Apollo Intelligent Connectivity (Beijing) Technology Co., Ltd., Beijing 100176 (CN)
(72) Inventor: XING, Liang, Beijing, 100176 (CN); SONG, Shuqing, Beijing, 100176 (CN); WU, Yi, Beijing, 100176 (CN); YANG, Wentao, Beijing, 100176 (CN); ZHAO, Shuaishuai, Beijing, 100176 (CN); LUO, Qionghua, Beijing, 100176 (CN); WANG, Lifeng, Beijing, 100176 (CN); FENG, Yunchan, Beijing, 100176 (CN); WANG, Tao, Beijing, 100176 (CN); CAO, Xiaochen, Beijing, 100176 (CN); WU, Fuchuang, Beijing, 100176 (CN)
(74) Representative: Viering, Jentschura & Partner mbB Patent- und Rechtsanwälte

(57) **Abstract**

The present disclosure provides a method and an apparatus for adjusting a driving training course, an electronic device, a storage medium, and a program product,, and relates to the field of driving information management, driving training course optimization, and the like. The specific implementation solution includes: collecting current training data in a current training course of a learner driver; acquiring historical training data of the learner driver; comparing the current training data and the historical training data with a corresponding evaluation criterion to obtain an evaluation result; and adjusting a subsequent training course of the learner driver according to the evaluation result. In the embodiments of the present disclosure, the current training data and the historical training data may be combined to obtain a comprehensive and objective mastery of the driving training content of the learner driver, and a subsequent learning content may be flexibly adjusted according to the mastery, thereby meeting the personalized learning need of the learner driver, and greatly improving the learning effect.

## Description

### TECHNICAL FIELD

The present disclosure relates to the field of computer technology, and in particular to the fields of driving information management, driving training course optimization, and the like.

### BACKGROUND

With the rapid development of modern transportation and the popularity of private vehicles, driving has become a necessary skill for people in the modern society. If a person wants to obtain a driving license, he/she generally needs to register and study in a driving school. A learner driver needs to systematically study courses provided by the driving school and be trained according to a driving training teaching and test syllabus, and conduct driving training correctly, safely, and normatively in accordance with requirements of safe driving skills of motor vehicle drivers during a training process. A driving license test may be applied for only after driving skills are mastered within a prescribed learning time.

In the existing technology, the effect of driving training is often perceived by the learner driver based on his/her mastery, or subjectively evaluated by a trainer based on visual observation, and the learner driver and the trainer often pay more attention to a current training situation, resulting in inaccurate evaluations. In addition, in course arrangement of the driving school, courses arranged for each learner driver to learn are fixed, which cannot meet personalized learning needs of the learner driver.

### SUMMARY

The present disclosure provides a method and apparatus for adjusting a driving training course, an electronic device, and a storage medium.

According to an aspect of the present disclosure, there is provided a method for adjusting a driving training course, including:
collecting current training data in a current training course of a learner driver;
acquiring historical training data of the learner driver;
comparing the current training data and the historical training data with a corresponding evaluation criterion to obtain an evaluation result; and
adjusting a subsequent training course of the learner driver according to the evaluation result.

According to another aspect of the present disclosure, there is provided an apparatus for adjusting a driving training course, including:
a current training data collection module configured for collecting current training data in a current training course of a learner driver;
a historical training data acquisition module configured for acquiring historical training data of the learner driver;
a comparison module configured for comparing the current training data and the historical training data with a corresponding evaluation criterion to obtain an evaluation result; and
a course adjustment module configured for adjusting a subsequent training course of the learner driver according to the evaluation result.

According to another aspect of the present disclosure, there is provided an electronic device, including:
at least one processor; and
a memory communicatively connected with the at least one processor, wherein
the memory stores instructions executable by the at least one processor, and the instructions, when executed by the at least one processor, enable the at least one processor to perform the method of any embodiment of the present disclosure.

According to another aspect of the present disclosure, there is provided a non-transitory computer-readable storage medium storing computer instructions, wherein the computer instructions, when executed by a computer, cause the computer to perform the method of any embodiment of the present disclosure.

According to another aspect of the present disclosure, there is provided a computer program product including computer programs, wherein the computer program, when executed by a processor, implements the method of any embodiment of the present disclosure.

According to the technology of the present disclosure, the training data of the learner driver is comprehensively obtained, a comprehensive evaluation of training mastery is obtained by analyzing the data, and the subsequent training course is adjusted according to the evaluation. This resolves a problem of how to obtain the driving mastery of the learner driver and flexibly adjust the subsequent learning content according to the mastery, realizes teaching students in accordance with their aptitude, and greatly improves the learning effect.

It should be understood that the content described in this section is neither intended to limit the key or important features of the embodiments of the present disclosure, nor intended to limit the scope of the present disclosure. Other features of the present disclosure will be readily understood through the following description.

### BRIEF DESCRIPTION OF THE DRAWINGS

The drawings are used to better understand the scheme and do not constitute a limitation to the present disclosure, wherein:
FIG. 1 is a schematic diagram of a method for adjusting a driving training course according to an embodiment of the present disclosure;
FIG. 2 is a schematic diagram of a method for acquiring historical training data of a learner driver according to an embodiment of the present disclosure;
FIG. 3 is a schematic diagram of a method for acquiring an evaluation result according to an embodiment of the present disclosure;
FIG. 4 is a schematic diagram of a method for adjusting a driving training course according to another embodiment of the present disclosure;
FIG. 5 is a schematic diagram of an overall scheme implementation framework according to an embodiment of the present disclosure;
FIG. 6 is a schematic structural diagram of an apparatus for adjusting a driving training course according to an embodiment of the present disclosure;
FIG. 7 is a schematic structural diagram of a historical training data acquisition module according to an embodiment of the present disclosure;
FIG. 8 is a schematic structural diagram of a comparison module according to an embodiment of the present disclosure;
FIG. 9 is a schematic structural diagram of an apparatus for adjusting a driving training course according to another embodiment of the present disclosure; and
FIG. 10 is a block diagram of an electronic device for implementing a method for adjusting a driving training course according to an embodiment of the present disclosure.

### DETAILED DESCRIPTION

Exemplary embodiments of the present disclosure are described below in combination with the drawings, including various details of the embodiments of the present disclosure to facilitate understanding, which should be considered as exemplary only. Thus, those of ordinary skill in the art should realize that various changes and modifications can be made to the embodiments described here without departing from the scope and spirit of the present disclosure. Likewise, descriptions of well-known functions and structures are omitted in the following description for clarity and conciseness.

The present disclosure is applied to application scenarios in which a driving school collects data of a learner driver and adjusts a driving training course, and belongs to the field of driving information management and driving training course optimization. Through comprehensive collection and processing of current and historical driving training data, a mastery evaluation of the learner driver is obtained, and the subsequent training course is adjusted according to the evaluation, which provides a good learning experience.

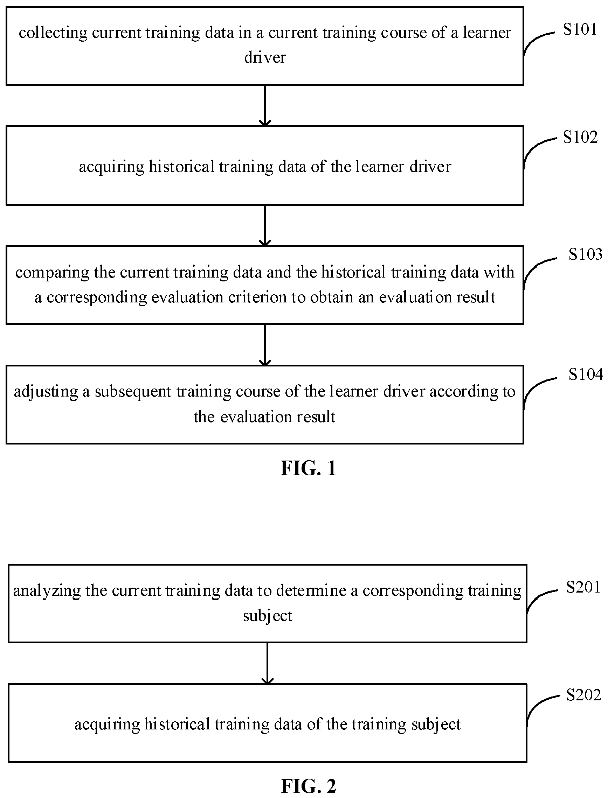

FIG. 1 is a schematic diagram of a method for adjusting a driving training course according to an embodiment of the present disclosure, and the method may include S101-S104.

S101, collecting current training data in a current training course of a learner driver.

In an example, a collection process may specifically include: in the current training course of the learner driver, determining a corresponding current operated vehicle according to information of the learner driver, and acquiring running status data of the current operated vehicle. The information of the learner driver includes but is not limited to a name, an age, and study time information of the learner driver. Relevant information such as a vehicle operated in the current training course of the learner driver and the content of the subject required to be trained may be obtained by confirming an identity of the learner driver. Furthermore, the running status data of the vehicle may be obtained in real time by locking the vehicle operated in the current course. Specifically, through hardware kits such as an intelligent sensing sensor, a GPS receiver, and a positioning antenna, running status data of various components of the vehicle where the learner driver is located, and running status data of the vehicle such as real-time status data of an additional hardware device and location information of the vehicle are obtained in real time.

In an example, the collection process may also include collecting the driving status data of the learner driver in the current training course of the learner driver. Specifically, the driving status data includes relevant information data obtained by using an intelligent sensing unit of a key component of the vehicle, such as information data obtained through a brake sensor, a seat belt sensor, a gear detection apparatus, and a door sensing apparatus; the driving status data also includes related information data obtained through a hardware apparatus such as an in-vehicle camera and a vehicle-mounted voice device, for example, a line of sight direction, a driving posture, and interaction of the learner driver. Based on the above driving status data, a driving operation, driving concentration, and safe driving awareness performance of the learner driver may be further judged. For example, if a seat belt sensor recognizes an abnormality during driving training of the learner driver, the learner driver may have a dangerous driving behavior of loosening a seat belt, which should be warned and recorded; if an image captured by the camera during driving shows that a line-of-sight direction of the learner driver is not in front for a long time, the driving behavior is non-compliant and should be reminded.

In an example, the collection process may further include: in the current training course of the learner driver, collecting site information corresponding to the current training course. Specifically, an intelligent hardware device such as an infrared sensor of the training site is used to obtain the site information such as whether the vehicle presses a line, and a distance between the vehicle and an edge of a parking space in a case where the vehicle is reversing into the parking space, to facilitate determination and processing such as precise positioning of a subsequent vehicle and site location matching.

The foregoing examples may be used to comprehensively and accurately collect all related data of the learner driver during the driving training process, to be used for subsequent comprehensive evaluation of an overall training effect of the learner driver, so as to obtain accurate and effective comprehensive evaluation information, and realize an objective evaluation of the driving training mastery degree of the learner driver.

S102, acquiring historical training data of the learner driver.

In an example, the historical training data of the learner driver is obtained from a cloud database. After being processed, the current training data is uploaded to the cloud database for unified storage and management. The cloud database stores all training data of all learner drivers, specifically including driving status information and training information of each subject and stage, and the like. Massive data information provides the basis for a series of subsequent functions and operations. All data information required for various screening, summary, statistics, analysis and other operations for evaluation of training effects of learner drivers may be obtained and called in the cloud database.

In an example, specific types of historical training data of the learner driver may be obtained according to specific requirements, for example, acquiring historical training information of a specific subject of the learner driver, or acquiring historical training information of the learner driver in a specific time period.

S103, comparing the current training data and the historical training data with a corresponding evaluation criterion to obtain an evaluation result.

In an example, a full evaluation on a current driving behavior and operation of the learner driver is conducted based on the current training data and the corresponding evaluation criterion. Specifically, data such as running status data of the vehicle, driving status data of the learner driver, and site information are obtained from the current training data. After format unification, cleaning, screening, and other processing, the data are compared with driving training and test standard information in real time to identify a non-compliant driving behavior of the learner driver and determine an accuracy of the current operation of the learner driver (also referred to as a qualification rate). Then, previous training data of the same subject is extracted from the historical training data, a learning progress of the learner driver is clarified, and numbers of qualifications and failures of the subject in an overall training process are separately counted to clarify an advantage subject and a disadvantage subject of the learner driver.

S 104, adjusting a subsequent training course of the learner driver according to the evaluation result.

In an example, at least one of a subject, a duration, or a number of times of the subsequent training course of the learner driver is adjusted according to the evaluation result. If it is judged that a subject is an excellent or advantage subject, the training content of the subject will be removed from the subsequent course, or the duration or the number of times of training of the subject will be reduced; on the contrary, if it is judged that a subject is a failing or a disadvantage subject, the training content of the subject will be increased in the subsequent course, such as increasing the duration or the number of times of training of the subject. By using the foregoing adjustment methods, the subsequent learning content may be adjusted flexibly, training of the disadvantage subject is strengthened, and training of the advantage subject is reduced, thereby meeting the personalized learning need of the learner driver.

In the embodiments of the present disclosure, all data in the current training course of the learner driver are comprehensively collected and obtained, which are combined with historical training data and compared with the evaluation criterion, to obtain a detailed and objective evaluation result, and the training content in the subsequent training process is adjusted based on the evaluation result. This evaluation method may conduct a comprehensive evaluation on a learning status of the learner driver objectively and accurately, and then adjust the training content in the subsequent course according to the evaluation result. This not only allows the learner driver and the trainer to grasp a training situation in time, but also improves a training accuracy of the learner driver within a limited time, thereby improving the training efficiency.

FIG. 2 is a schematic diagram of a method for acquiring historical training data of a learner driver according to an embodiment of the present disclosure. As shown in FIG. 2, the method may include S201-S202.

S201, analyzing the current training data to determine a corresponding training subject.

In an example, the current training data is first analyzed to obtain the location information and the running status of the current operated vehicle. Specifically, the current operated vehicle corresponding to the learner driver is obtained from the current training data, and then the location information and the running status data of the vehicle are obtained; then the location information is used to determine the corresponding training site, for example, the location information is used to determine that the current operated vehicle is in a training site where the current operated vehicle is reversing into a parking space; finally, the corresponding training subject is determined according to the training site and the running status. Specifically, after the subject that the learner driver is learning is determined according to the training site where the vehicle is located, it is further determined according to the running status of the vehicle, combined with the subject being learned, whether the learner driver is practicing a step-by-step or continuous action, namely, clarifying a stage of the subject that the learner driver is learning.

In the existing technology, a corresponding training subject in the current training course can only be obtained through the content of course arrangement. In a case where a plurality of training subjects are arranged in one course, specific information of the current training subject cannot be obtained in real time and accurately, and it is also not convenient for statistics and evaluation of a specific training subject. By adopting the foregoing embodiment, the location information of the operated vehicle may be used to learn about the subject that the learner driver is learning, and the running status may be used to further obtain the specific stage of the subject that the learner driver is learning, which provides an accurate data basis for the subsequent evaluation.

S202, acquiring historical training data of the training subject.

In an example, after acquiring the current subject that the learner driver is learning, historical training data of the corresponding subject is obtained from the cloud database for later comparison and evaluation.

In the foregoing example of the present disclosure, the current training subject is determined first, and then the corresponding training subject is called from the historical training data for later comparison and evaluation, which may ensure that data basis of the evaluation is no longer limited to the current data, and a more comprehensive and objective evaluation result may be obtained in combination with the historical data.

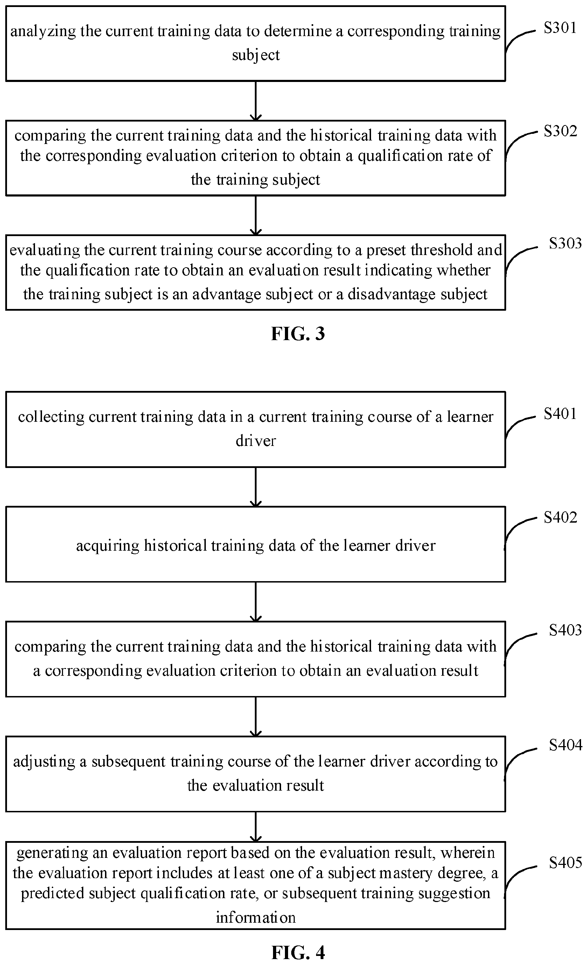

FIG. 3 is a schematic diagram of a method for acquiring an evaluation result according to an embodiment of the present disclosure. As shown in FIG. 3, the method may include S301-S303.

S301, analyzing the current training data to determine a corresponding training subject.

In this example, S301 is the same as S201 in the previous embodiment, and details are not described herein again.

S302, comparing the current training data and the historical training data with the corresponding evaluation criterion to obtain a qualification rate of the training subj ect.

In an example, the current training data is first compared with the driving training and test standard information in real time to identify a non-compliant driving behavior of the learner driver and determine an accuracy of an operation of the learner driver, to obtain a qualification rate of the current driving subject of the learner driver. Then a driving record of the corresponding subject is obtained from the historical training data, which is analyzed to obtain an overall training situation, for example, statistics of a number of times and a duration of training of the corresponding subject, and a complete training video available for playback and viewing. Then numbers of qualifications and failures in the training are counted based on the current training data and the historical training data, and a ratio of the number of qualifications or failures to a total number of times of training is calculated to obtain a total qualification rate.

S303, evaluating the current training course according to a preset threshold and the qualification rate to obtain an evaluation result indicating whether the training subject is an advantage subject or a disadvantage subject.

In an example, a threshold is set in advance. For example, if the qualification rate is above 85%, it is regarded as excellent, and the corresponding subject is regarded as an advantage subject; if the qualification rate is less than 60%, the corresponding subject is regarded as a disadvantage subject, and reasons for unqualification are counted and analyzed, specific to a specific wrong operation. For example, operations of a subject of parallel parking involve a steering wheel operation, a gear operation, an indicator light operation, and the like. If the parallel parking failures account for a large proportion in the record, specific operations that led to the failures are counted, for example, a too large steering wheel rotation angle, etc.

By adopting the examples of this disclosure, the qualification rate of the corresponding subject is obtained through comparison with the evaluation criterion, and the evaluation result indicating the advantage subject or the disadvantage subject is obtained based on the historical training information. This reflects an overall training situation of the learner driver, clarifies a learning progress of the learner driver, and provide a basis for further identifying a subject achievement and level of the learner driver. For the disadvantage subject, the extracted and recorded erroneous operations of the learner driver in driving training are main information that the learner driver and the trainer should pay attention to. Through detailed information display and analysis of an unqualified subject, training weaknesses and non-compliant behaviors of the learner driver may be found as a further guidance for training direction and matters needing attention.

FIG. 4 is a schematic diagram of a method for adjusting a driving training course according to another embodiment of the present disclosure. As shown in FIG. 4, the method may include S401-S405.

S401, collecting current training data in a current training course of a learner driver;

S402, acquiring historical training data of the learner driver;

S403, comparing the current training data and the historical training data with a corresponding evaluation criterion to obtain an evaluation result; and

S404, adjusting a subsequent training course of the learner driver according to the evaluation result.

In this embodiment, steps of S401 to S404 are the same as steps of S 101 to S104 in the previous embodiment, and details are not described herein again.

S405, generating an evaluation report based on the evaluation result, wherein the evaluation report includes at least one of a subject mastery degree, a predicted subject qualification rate, or subsequent training suggestion information.

In an example, the historical training data and a multi-dimensional evaluation result of the learner driver are summarized and used to generate a personalized driving training evaluation report of the learner driver, which may perform statistical display of historical training key information of the learner driver, and give training feedback and suggestions to the learner driver. Specifically, this includes an evaluation of the training mastery degree of the learner driver in each subject, a predicted qualification rate of the learner driver in each subject, a training requirement and a suggestion for the learner driver in each subject, and the like. For example, if the learner driver repeatedly presses a line in the training of reversing the vehicle into a parking space, which is always caused by operating a steering wheel too fast, the learner driver may be given a suggestion such as slowing down an operating speed of the steering wheel appropriately.

In an example, the learner driver may use an intelligent terminal device to view the content of the report in real time, and carry out targeted subsequent training to improve the training efficiency and the operation accuracy; the driving school may also use the intelligent terminal to view reports of all the learner drivers, teach students in accordance with their aptitude, and formulate reasonable training plans for learner drivers, thereby improving overall training efficiency of the driving school.

By adopting the examples of the present disclosure, mastery degree of the leaner driver in each training subject may be quantitatively evaluated, and the system may use the intelligent evaluation model to give an estimated qualification rate based on data in the evaluation result, which visually displays the training result of the learner driver, and gives an expectation and a training suggestion based on the result data; output of the evaluation report is aimed to allow the learner driver to have a correct understanding of a current driving ability thereof, and to allow the driving school or the trainer to have a clearer understanding and grasp of a learning progress and a status of each learner driver.

### Application examples:

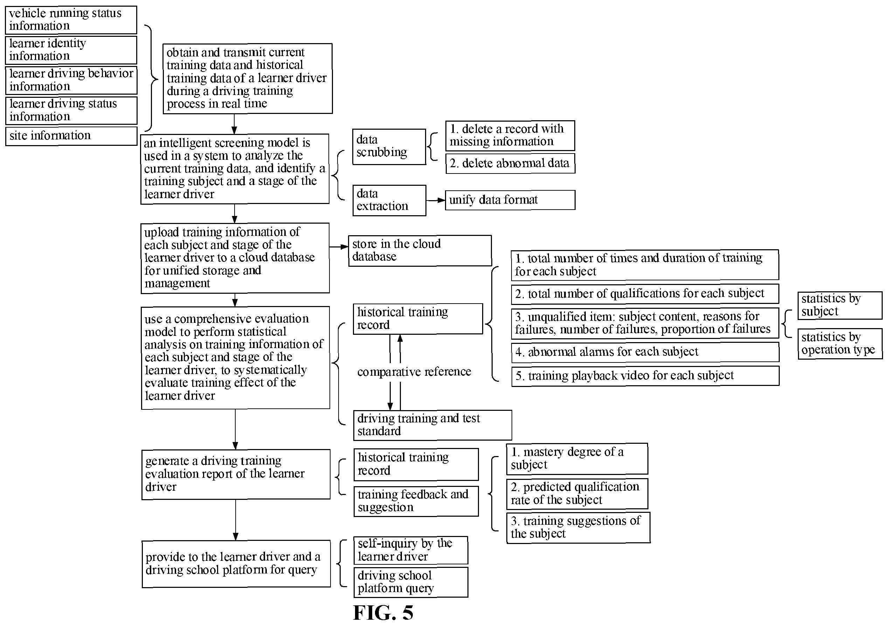

As shown in FIG. 5, a process of applying an embodiment of the present disclosure to adjust a driving training course includes the following contents:
(1) Current training data and historical training data of a learner driver during a driving training process are acquired and transmitted in real time, including:
   through data synchronization with a driving school training reservation system and a cloud, information of the learner driver is obtained, including basic information such as a name and an age of the learner driver, as well as study time information and historical training record information of the learner driver; and a correspondence between the learner driver, the vehicle, and the training subject is obtained through identification information authentication of the learner driver, so as to confirm an operated vehicle of the learner driver and collect subsequent vehicle information.

Through hardware kits such as an intelligent sensing sensor, a GPS receiver, and a positioning antenna, running status data of various components of the vehicle of the learner driver, real-time status data of an additional hardware device and location information of the vehicle are obtained in real time; driving behavior information of the learner driver is obtained by using an intelligent sensing unit of a key component of the vehicle, including but not limited to a brake sensor, a seat belt sensor, a gear detection apparatus, and a door sensing apparatus, so as to further judge the driving operation of the learner driver. For example, if a seat belt sensor recognizes an abnormality during driving training of the learner driver, the learner driver may have a dangerous driving behavior of loosening a seat belt, which should be warned and recorded.

The driving status information of the learner driver, including but not limited to a line of sight direction, a driving posture, and interaction of the learner driver is obtained through a hardware apparatus such as an in-vehicle camera and a vehicle-mounted voice device, so as to judge driving concentration and safe driving awareness performance of the learner driver. For example, if an image captured by the camera during driving shows that a vision of the learner driver is not in front for a long time, the driving behavior is non-compliant and should be reminded.

The site information is obtained through the intelligent hardware device of the training site, which facilitates determination and processing such as positioning of a subsequent vehicle and site location matching.

It should be supplemented that the running status information of the vehicle, the driving behavior information and the driving status information of the learner driver, and the site information in the foregoing method all belong to the collected current training data.

(2) An intelligent screening model is used in a system to analyze the current training data, and identify a training subject and a stage of the learner driver, which specifically includes:
According to an intelligent screening principle, combined with the identification information of the learner driver, the training information of the learner driver is screened from training information of all learner drivers, abnormal data and records with missing information are eliminated, and the current training data is cleaned up in a unified manner; at the same time, standardized data format integration and data extraction are carried out in the system to obtain effective current training data of the learner driver.

Based on the effective current training data of the learner driver, combined with the training site of the vehicle obtained based on the location information of the vehicle, a subject and a training stage of the learner driver are identified, and the training subject and stage information of the learner driver are obtained, so as to separately evaluate subsequent different stages of training. For example: a learner driver A conducts driving training in a region B, positioning information of the vehicle matches site calibration information of reversing the vehicle into a parking space, and the corresponding information of training in which the learner driver reverses the vehicle into the parking space is identified.

(3) Training information of each subject and stage of the learner driver is uploaded to a cloud database for unified storage and management.

The cloud database stores training data of all learner drivers, and massive data information provides the basis for a series of subsequent functions and operations. All data information required for various screening, summary, statistics, analysis and other operations for training evaluation of learner drivers may be obtained and called in the cloud database.

(4) A comprehensive evaluation model is used to perform statistical analysis on training information of each subject and stage of the learner driver, so as to systematically evaluate the training effect of the learner driver. An entire process of the historical training of the learner driver is recorded and evaluated by the system, and the training of the learner driver is comprehensively evaluated according to the corresponding evaluation criterion, including:
During the driving training process of the learner driver, the system conducts a full evaluation on the driving behavior and operation of the learner driver in real time. The collected current training data is used to compare with the driving training and test standard information in real time to identify a non-compliant driving behavior of the learner driver and determine an accuracy of an operation of the learner driver, to obtain a qualification rate corresponding to the driving subject.

An overall training situation of each subject of the learner driver includes: statistics of a number of times and a duration of training, a complete training video available for playback and viewing, and the like. This reflects the overall training situation of the learner driver, clarifies the learning progress of the learner driver, and provides a basis for further identifying the learning achievements and levels of the learner driver.

A qualification situation of each subject of the learner driver includes: statistics of a number of times of qualified training, a complete training video available for playback and viewing, and the like. This reflects a more proficient training situation of the learner driver, clarifies the subject advantage of the learner driver, and provides a basis for a subsequent evaluation of the training effect.

An unqualified situation of each subject of the learner driver: unqualified training content and the corresponding reason for unqualification, a number of times of unqualified training and the corresponding ratio, a complete training video available for playback and viewing, and the like. Statistical analysis is carried out according to a training subject and an operation type during the training process of the learner driver, for example: reversing the vehicle into a parking space, parallel parking, and the like; the operation type includes but is not limited to: a steering wheel operation, a gear operation, and an indicator light operation. This part of information records an erroneous operation of the learner driver in driving training, and is main information that the learner driver and the trainer should pay attention to. Through detailed information display and analysis of an unqualified subject, training weaknesses and non-compliant behaviors of the learner driver may be found as a further guidance for training direction and matters needing attention.

Abnormal alarm situation in training of each subject of the learner driver includes: statistics on a number of abnormal alarms of the vehicle in training and reasons, including but not limited to: dangerous driving operations of the learner driver, and emergency treatment of the vehicle in dangerous situations. This part reflects dangerous behaviors of the learner driver in driving and operations that the learner driver must pay attention to and abandon. This should be a key reminder.

Through recording and analysis of the foregoing types of driving information, the training process of the learner driver is comprehensively inspected, and an evaluation subject with a higher attention level is additionally marked and processed to evaluate the training effect of the learner driver in a multi-dimension.

(5) A driving training evaluation report of the learner driver is generated.

Historical training information and a multi-dimensional training effect evaluation result of the learner driver are summarized and used by the system to generate a personalized driving training evaluation report of the learner driver, which may perform statistical display of historical training key information of the learner driver, and give training feedback and suggestions to the learner driver. This includes an evaluation of training mastery degree of the learner driver in each subject, a predicted qualification rate of the learner driver in each subject, a training requirement and a suggestions for the learner driver in each subject, and the like. This is aimed to quantitatively evaluate mastery degree of the leaner driver in each training subject, and give an estimated qualification rate by the system through the intelligent evaluation model, which visually displays the training result of the learner driver, and gives expectations and training suggestions based on the result data. For example, if the learner driver repeatedly presses a line in training of reversing the vehicle into a parking space, which is always caused by operating a steering wheel too fast, the learner driver may be given a suggestion such as slowing down an operating speed of the steering wheel appropriately.

(6) A function of viewing driving training evaluation report of the learner driver is provided for the learner driver and a driving school platform.

Output of the training effect evaluation report of the learner driver is aimed to allow the learner driver to have a correct understanding of a current driving ability thereof, and to allow the driving school or the trainer to have a clearer understanding and grasp of a learning progress and a status of each learner driver. Therefore, the system provides an independent access function for the learner driver and the driving school platform. The learner driver may use an intelligent terminal device to view the content of the report in real time, and carry out targeted subsequent training to improve the training efficiency and the operation accuracy; the driving school may also use the intelligent terminal to view reports of all the learner drivers, teach students in accordance with their aptitude, and formulate reasonable training plans for learner drivers, thereby improving the overall training efficiency of the driving school.

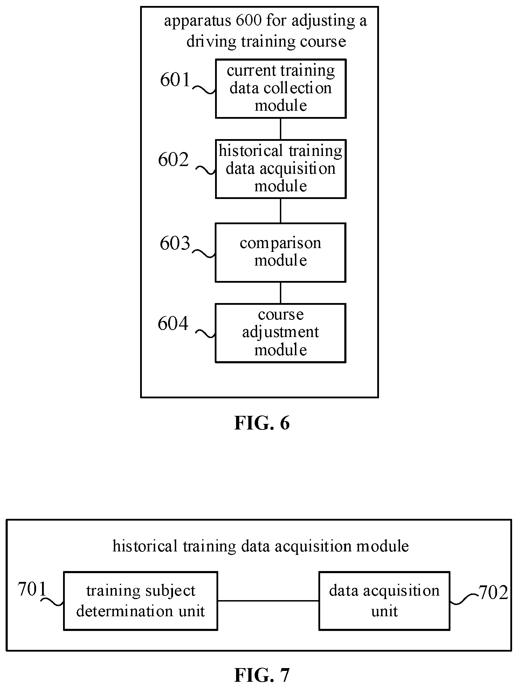

According to an embodiments of the present disclosure, an apparatus 600 for adjusting a driving training course is provided. FIG. 6 is a schematic structural diagram of an apparatus for adjusting a driving training course according to an embodiment of the present disclosure. As shown in FIG. 6, the apparatus includes:
a current training data collection module 601 configured for collecting current training data in a current training course of a learner driver;
a historical training data acquisition module 602 configured for acquiring historical training data of the learner driver;
a comparison module 603 configured for comparing the current training data and the historical training data with a corresponding evaluation criterion to obtain an evaluation result; and
a course adjustment module 604 configured for adjusting a subsequent training course of the learner driver according to the evaluation result.

In an example, the current training data collection module includes at least one of:
a first collection unit configured for, in the current training course of the learner driver, determining a corresponding current operated vehicle according to information of the learner driver, and acquiring running status data of the current operated vehicle;
a second collection unit configured for, in the current training course of the learner driver, collecting driving status data of the learner driver; or
a third collection unit configured for, in the current training course of the learner driver, collecting site information corresponding to the current training course.

FIG. 7 is a schematic structural diagram of a historical training data acquisition module in an apparatus for adjusting a driving training course according to an embodiment of the present disclosure. As shown in FIG. 7, the historical training data acquisition module may include:
a training subject determination unit 701 configured for analyzing the current training data to determine a corresponding training subject; and
a data acquisition unit 702 configured for acquiring historical training data of the training subject.

In an example, the training subject determination unit is specifically configured for:
analyzing the current training data to obtain location information and a running status of the current operated vehicle;
determining a corresponding training site by using the location information; and
determining the corresponding training subject according to the training site and the running status.

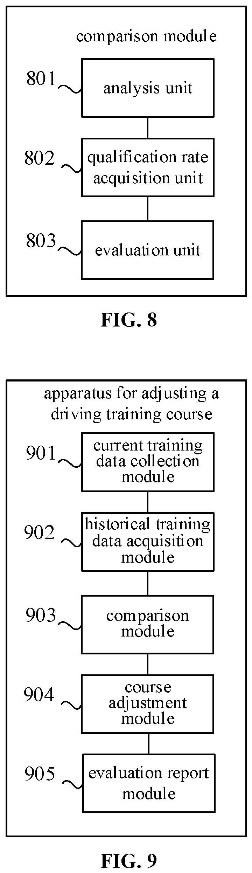

FIG. 8 is a schematic structural diagram of a comparison module in an apparatus for adjusting a driving training course according to an embodiment of the present disclosure. As shown in FIG. 8, the comparison module may include:
an analysis unit 801 configured for analyzing the current training data to determine a corresponding training subject;
a qualification rate acquisition unit 802 configured for comparing the current training data and the historical training data with the corresponding evaluation criterion to obtain a qualification rate of the training subject; and
an evaluation unit 803 configured for evaluating the current training course according to a preset threshold and the qualification rate, to obtain the evaluation result indicating whether the training subject is an advantage subject or a disadvantage subject.

In an example, the foregoing course adjustment module is specifically configured for:
adjusting at least one of a subject, a duration, or a number of times of the subsequent training course of the learner driver according to the evaluation result.

FIG. 9 is a schematic diagram of a composition structure of another apparatus for adjusting a driving training course according to an embodiment of the present disclosure. As shown in FIG. 9, the apparatus includes:
a current training data collection module 901, a historical training data acquisition module 902, a comparison module 903, and a course adjustment module 904, the foregoing modules 901 to 904 are the same as the modules 601 to 604, and details are not described herein again.

The foregoing apparatus further includes an evaluation report module 905 configured for generating an evaluation report based on the evaluation result, wherein the evaluation report includes at least one of a subject mastery degree, a predicted subject qualification rate, or subsequent training suggestion information.

For functions of units, modules, or submodules in each apparatus according to the embodiments of the present disclosure, reference may be made to corresponding description in the foregoing method embodiments, and details are not described herein again.

According to embodiments of the present disclosure, the present disclosure also provides an electronic device, a readable storage medium and a computer program product.

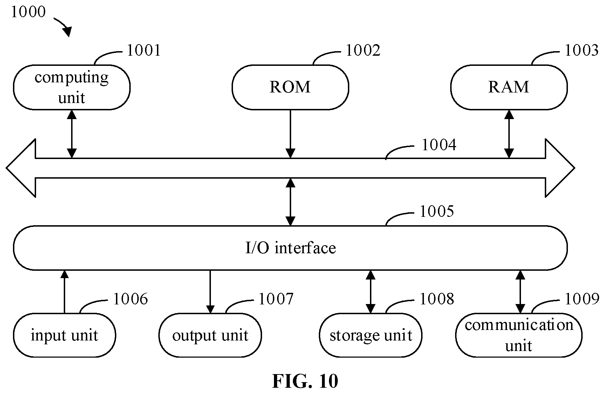

FIG. 10 shows a schematic block diagram of an example electronic device 1000 that may be used to implement embodiments of the present disclosure. The electronic device is intended to represent various forms of digital computers, such as laptop computers, desktop computers, workstations, personal digital assistants, servers, blade servers, mainframe computers, and other suitable computers. The electronic device may also represent various forms of mobile devices, such as a personal digital assistant, a cellular telephone, a smart phone, a wearable device, and other similar computing devices. The components shown herein, their connections and relationships, and their functions are by way of example only and are not intended to limit the implementations of the present disclosure described and/or claimed herein.

As shown in FIG. 10, the electronic device 1000 includes a computing unit 1001 that may perform various suitable actions and processes in accordance with computer programs stored in a read only memory (ROM) 1002 or computer programs loaded from a storage unit 1008 into a random access memory (RAM) 1003. In the RAM 1003, various programs and data required for the operation of the electronic device 1000 may also be stored. The computing unit 1001, the ROM 1002 and the RAM 1003 are connected to each other through a bus 1004. An input/output (I/O) interface 1005 is also connected to the bus 1004.

A plurality of components in the electronic device 1000 are connected to the I/O interface 1005, including: an input unit 1006, such as a keyboard, a mouse, etc.; an output unit 1007, such as various types of displays, speakers, etc.; a storage unit 1008, such as a magnetic disk, an optical disk, etc.; and a communication unit 1009, such as a network card, a modem, a wireless communication transceiver, etc. The communication unit 1009 allows the electronic device 1000 to exchange information/data with other devices over a computer network, such as the Internet, and/or various telecommunications networks.

The computing unit 1001 may be various general purpose and/or special purpose processing assemblies having processing and computing capabilities. Some examples of the computing unit 1001 include, but are not limited to, a central processing unit (CPU), a graphics processing unit (GPU), various specialized artificial intelligence (AI) computing chips, various computing units running machine learning model algorithms, a digital signal processor (DSP), and any suitable processor, controller, microcontroller, etc. The computing unit 1001 performs various methods and processes described above, such as the method for adjusting a driving training course. For example, in some embodiments, the method for adjusting a driving training course may be implemented as computer software programs that are physically contained in a machine-readable medium, such as the storage unit 1008. In some embodiments, some or all of the computer programs may be loaded into and/or installed on the electronic device 1000 via the ROM 1002 and/or the communication unit 1009. In a case where the computer programs are loaded into the RAM 1003 and executed by the computing unit 1001, one or more of steps of the above method for adjusting a driving training course may be performed. Alternatively, in other embodiments, the computing unit 1001 may be configured to perform the above method for adjusting a driving training course in any other suitable manner (e.g., by means of a firmware).

Various embodiments of the systems and techniques described herein above may be implemented in a digital electronic circuit system, an integrated circuit system, a field programmable gate array (FPGA), an application specific integrated circuit (ASIC), an application specific standard product (ASSP), a system on a chip (SOC), a load programmable logic device (CPLD), a computer hardware, a firmware, a software, and/or a combination thereof. These various implementations may include an implementation in one or more computer programs, which can be executed and/or interpreted on a programmable system including at least one programmable processor; the programmable processor may be a dedicated or general-purpose programmable processor and capable of receiving and transmitting data and instructions from and to a storage system, at least one input device, and at least one output device.

The program codes for implementing the methods of the present disclosure may be written in any combination of one or more programming languages. These program codes may be provided to a processor or controller of a general purpose computer, a special purpose computer, or other programmable data processing apparatus such that the program codes, when executed by the processor or controller, enable the functions/operations specified in the flowchart and/or the block diagram to be performed. The program codes may be executed entirely on a machine, partly on a machine, partly on a machine as a stand-alone software package and partly on a remote machine, or entirely on a remote machine or server.

In the context of the present disclosure, the machine-readable medium may be a tangible medium that may contain or store programs for using by or in connection with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination thereof. More specific examples of the machine-readable storage medium may include one or more wire-based electrical connection, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination thereof.

In order to provide an interaction with a user, the system and technology described here may be implemented on a computer having: a display device (e. g., a cathode ray tube (CRT) or a liquid crystal display (LCD) monitor) for displaying information to the user; and a keyboard and a pointing device (e. g., a mouse or a trackball), through which the user can provide an input to the computer. Other types of apparatuses may also be configured to provide interaction with the user; for example, feedback provided to the user may be any form of sensory feedback (for example, visual feedback, auditory feedback, or tactile feedback); and may be in any form (including audio input, voice input, or tactile input) to receive input from the user.

The systems and techniques described herein may be implemented in a computing system (e.g., as a data server) that may include a background component, or a computing system (e.g., an application server) that may include a middleware component, or a computing system (e.g., a user computer having a graphical user interface or a web browser through which a user may interact with embodiments of the systems and techniques described herein) that may include a front-end component, or a computing system that may include any combination of such background components, middleware components, or front-end components. The components of the system may be connected to each other through a digital data communication in any form or medium (e.g., a communication network). Examples of the communication network may include a local area network (LAN), a wide area network (WAN), and the Internet.

The computer system may include a client and a server. The client and the server are typically remote from each other and typically interact via the communication network. The relationship of the client and the server is generated by computer programs running on respective computers and having a client-server relationship with each other.

It should be understood that the steps can be reordered, added or deleted using the various flows illustrated above. For example, the steps described in the present disclosure may be performed concurrently, sequentially or in a different order, so long as the desired results of the technical solutions disclosed in the present disclosure can be achieved, and there is no limitation herein.

The above-described specific embodiments do not limit the scope of the present disclosure. It will be apparent to those skilled in the art that various modifications, combinations, sub-combinations and substitutions are possible, depending on design requirements and other factors. Any modifications, equivalent substitutions, and improvements within the spirit and principles of the present disclosure are intended to be included within the scope of the present disclosure.

## Claims

1. A method for adjusting a driving training course, comprising:
collecting (S101, S401) current training data in a current training course of a learner driver;
acquiring (S102, S402) historical training data of the learner driver;
comparing (S103, S403) the current training data and the historical training data with a corresponding evaluation criterion to obtain an evaluation result; and
adjusting (S104, S404) a subsequent training course of the learner driver according to the evaluation result.

2. The method of claim 1, wherein the collecting (S101, S401) the current training data in the current training course of the learner driver, comprises at least one of:
in the current training course of the learner driver, determining a corresponding current operated vehicle according to information of the learner driver, and acquiring running status data of the current operated vehicle;
in the current training course of the learner driver, collecting driving status data of the learner driver; or
in the current training course of the learner driver, collecting site information corresponding to the current training course.

3. The method of claim 1 or 2, wherein the acquiring (S102, S402) the historical training data of the learner driver, comprises:
analyzing (S201) the current training data to determine a corresponding training subject; and
acquiring (S202) historical training data of the training subject,
optionally, the analyzing the current (S201) training data to determine the corresponding training subject, comprises:
analyzing the current training data to obtain location information and a running status of the current operated vehicle;
determining a corresponding training site by using the location information; and
determining the corresponding training subject according to the training site and the running status.

4. The method of any one of claims 1 to 3, wherein the comparing (S103, S403) the current training data and the historical training data with the corresponding evaluation criterion to obtain the evaluation result, comprises:
analyzing (S301) the current training data to determine a corresponding training subj ect;
comparing (S302) the current training data and the historical training data with the corresponding evaluation criterion to obtain a qualification rate of the training subject; and
evaluating (S303) the current training course according to a preset threshold and the qualification rate, to obtain the evaluation result indicating whether the training subject is an advantage subject or a disadvantage subject.

5. The method of any one of claims 1 to 4, wherein the adjusting (S104, S404) the subsequent training course of the learner driver according to the evaluation result, comprises:
adjusting at least one of a subject, a duration, or a number of times of the subsequent training course of the learner driver according to the evaluation result.

6. The method of any one of claims 1 to 5, further comprising:
generating (S405) an evaluation report based on the evaluation result, wherein the evaluation report comprises at least one of a subject mastery degree, a predicted subject qualification rate, or subsequent training suggestion information.

7. An apparatus (600) for adjusting a driving training course, comprising:
a current training data collection module (601, 901) configured for collecting current training data in a current training course of a learner driver;
a historical training data acquisition module (602, 902) configured for acquiring historical training data of the learner driver;
a comparison module (603, 903) configured for comparing the current training data and the historical training data with a corresponding evaluation criterion to obtain an evaluation result; and
a course adjustment module (604, 904) configured for adjusting a subsequent training course of the learner driver according to the evaluation result.

8. The apparatus of claim 7, wherein the current training data collection module (601, 901) comprises at least one of:
a first collection unit configured for, in the current training course of the learner driver, determining a corresponding current operated vehicle according to information of the learner driver, and acquiring running status data of the current operated vehicle;
a second collection unit configured for, in the current training course of the learner driver, collecting driving status data of the learner driver; or
a third collection unit configured for, in the current training course of the learner driver, collecting site information corresponding to the current training course.

9. The apparatus of claim 7 or 8, wherein the historical training data acquiring module (602, 902) comprises:
a training subject determination unit (701) configured for analyzing the current training data to determine a corresponding training subject; and
a data acquisition unit (702) configured for acquiring historical training data of the training subject,
optionally, the training subject determination unit (701) is specifically configured for:
analyzing the current training data to obtain location information and a running status of the current operated vehicle;
determining a corresponding training site by using the location information; and
determining the corresponding training subject according to the training site and the running status.

10. The apparatus of any one of claims 7 to 9, wherein the comparison module (603, 903) comprises:
an analysis unit (801) configured for analyzing the current training data to determine a corresponding training subject;
a qualification rate acquisition unit (802) configured for comparing the current training data and the historical training data with the corresponding evaluation criterion to obtain a qualification rate of the training subject; and
an evaluation unit (803) configured for evaluating the current training course according to a preset threshold and the qualification rate, to obtain the evaluation result indicating whether the training subject is an advantage subject or a disadvantage subject.

11. The apparatus of any one of claims 7 to 10, wherein the course adjustment module (604, 904) is specifically configured for:
adjusting at least one of a subject, a duration, or a number of times of the subsequent training course of the learner driver according to the evaluation result.

12. The apparatus of any one of claims 7 to 11, further comprising:
an evaluation report module (905) configured for generating an evaluation report based on the evaluation result, wherein the evaluation report comprises at least one of a subject mastery degree, a predicted subject qualification rate, or subsequent training suggestion information.

13. An electronic device, comprising:
at least one processor; and
a memory communicatively connected with the at least one processor, wherein
the memory stores instructions executable by the at least one processor, and the instructions, when executed by the at least one processor, enable the at least one processor to perform the method of any one of claims 1 to 6.

14. A non-transitory computer-readable storage medium storing computer instructions, wherein the computer instructions, when executed by a computer, cause the computer to perform the method of any one of claims 1 to 6.

15. A computer program product comprising a computer program, wherein the computer program, when executed by a processor, implements the method of any one of claims 1 to 6.
